# EUROPÄISCHE PATENTANMELDUNG

(11) **EP 2 522 565 A1**
(43) Veröffentlichungstag der Anmeldung: **14.11.2012**
(21) Anmeldenummer: 12165432.1
(22) Anmeldetag: 25.04.2012
(51) Int. Cl.: B62D 61/12

(54) **Nutzfahrzeuganhänger**

(30) Priorität: 12.05.2011 DE 102011050318
(71) Anmelder: Schmitz Cargobull Gotha GmbH, 99867 Gotha (DE)
(72) Erfinder: Volz, Siegfried, 89610 Oberdischingen (DE)
(74) Vertreter: Weber, Gerhard

(57) **Zusammenfassung**

Für einen Nutzfahrzeuganhänger, insbesondere einen Sattelauflieger-Anhänger (SK, SP) mit einer Dreifach-Achsanordnung wird vorgeschlagen, eine der Achsen als Schwachlastachse (LM, LV, LH) mit gegenüber den beiden anderen Achsen (HV, HM, HH) niedrigerem Eigengewicht und geringerer maximaler Achsbelastung auszuführen. In bevorzugter Weiterbildung sind die beiden anderen Achsen als Liftachsen ausgebildet und es ist ein Schwachlast-Fahrzustand bei unbeladenem oder nur gering beladenem Anhänger (SK, SP) einstellbar, bei welchem lediglich die Schwachlastachse (LM, LV, LH) auf der Fahrbahn abrollt. Die Erfindung ist insbesondere von Vorteil bei Sattelkippern (SK), bei welchen typischerweise ein besonders hoher Anteil an Leerfahrten gegeben ist. Die besondere Achsanordnung mit der Schwachlastachse (LM, LV, LH) führt aufgrund des niedrigeren Eigenwichts der Schwachlastachse zu einem Zuwachs an Nutzlast. Im Schwachlast-Fahrzustand ergibt sich ein geringer Rollwiderstand und ein geringer Reifenverschleiß, wobei die Reifen der Schwachlastachse speziell auf einen geringen Rollwiderstand auf Asphalt optimiert sein können. Der Achsabstand (DL) der Schwachlastachse (LM, LV, LH) zu einer oder beiden anderen Achsen (HV, HM, HH) kann gegenüber dem Achsabstand (DN) drei Achsen gleicher maximaler Achsbelastung reduziert sein.

## Beschreibung

Die Erfindung betrifft einen Nutzfahrzeuganhänger mit einer Dreifach-Achsanordnung, insbesondere einen Sattelauflieger-Anhänger.

Sattelauflieger-Anhänger für den Straßenverkehr sind typischerweise mit einer Dreifach-Achsanordnung ausgerüstet, welche im rückwärtigen Teil des Chassis drei in Fahrtrichtung mit geringem Abstand aufeinander folgend angeordnete Achsen enthält. Eine oder auch zwei Achsen können als Liftachsen ausgebildet sein, welche von der Fahrbahn abgehoben werden können, um den Reifenverschleiß und den Rollwiderstand zu verringern.

Bei Nutzfahrzeuganhängern sind aus wirtschaftlichen Gründen eine hohe Nutzlast und geringe Betriebs- und Wartungskosten von wesentlicher Bedeutung.

Der vorliegenden Erfindung liegt die Aufgabe zugrunde, einen Nutzfahrzeuganhänger, insbesondere einen Sattelauflieger-Anhänger mit verbesserter Wirtschaftlichkeit anzugeben.

Die Erfindung ist im unabhängigen Patentanspruch beschrieben. Die abhängigen Ansprüche enthalten vorteilhafte Ausgestaltungen und Weiterbildungen der Erfindung.

Die Ausbildung einer der drei Achsen als eine nachfolgend und in den Ansprüchen als Schwachlastachse bezeichnete Achse führt vorteilhafterweise zu einer Verringerung des Eigengewichts des Nutzfahrzeuganhängers und damit zu einem Zuwachs an Nutzlast, was insbesondere bei Nutzfahrzeuganhängern, welche typischerweise bis an die Zuladungsgrenze beladen werden, insbesondere Sattelkippern, von besonderem wirtschaftlichen Vorteil ist.

Durch das niedrigere Eigengewicht der Schwachlastachse ergibt sich vorteilhafterweise ein Zugewinn an Nutzlast, welcher beispielsweise zwischen 250 kg und 300 kg liegen kann. Die Reifen der Schwachlastachse können insbesondere als Reifen mit auf Leichtlauf optimierten Eigenschaften ausgeführt sein.

Von besonderem Vorteil ist auch eine Ausführung, bei welcher die Schwachlastachse zu wenigstens einer der beiden anderen Achsen einen Achsabstand aufweist, der geringer ist als ein durch Zulassungsvorschriften bestimmter Minimalabstand zweier Achser der Art der beiden anderen Achsen. Insbesondere bei Anordnung der Schwachlastachse als die mittlere der drei Achsen kann hierdurch ein deutlich geringerer Achsabstand zwischen der vordersten und der hintersten Achse erreicht werden, was bei Kurvenfahrten den Reifenabrieb verringert.

Als Schwachlastachse sei eine Achse bezeichnet, welche gegenüber jeder der beiden anderen Achsen eine verringerte maximale Achslast besitzt und welche in Folge einer solchen verringerten maximalen Achslast ein gegenüber jeder der beiden anderen Achsen verringertes Eigengewicht aufweist. Das Eigengewicht einer Achse ist insbesondere bestimmt durch den Achskörper und die Räder. Eine Verringerung des Eigengewichts bei der Schwachlastachse kann zum einen auf einem niedrigeren Gewicht des für eine geringere Belastung ausgelegten Achskörpers und zum anderen und insbesondere durch ein niedrigeres Gewicht der Räder der Schwachlastachse gegenüber den Rädern der beiden anderen Achsen erreicht werden. Für den letztgenannten Effekt des niedrigeren Radgewichts weisen vorteilhafterweise die Räder der Schwachlastachse einen geringeren Durchmesser auf als die Räder der beiden anderen Achsen. Die Schwachlastachse ist vorzugsweise nur einfach bereift. Der Raddurchmesser ist bei der Schwachlastachse vorteilhafterweise um wenigstens 10 %, insbesondere um wenigstens 20 % geringer als bei den beiden anderen Achsen. Insbesondere kann auch die Reifenbreite auf der Schwachlastachse wesentlich geringer sein als auf den beiden anderen Achsen, vorteilhafterweise um wenigstens 10 %, insbesondere wenigstens 20 %, wodurch Gewicht und Rollwiderstand der Reifen auf der Schwachlastachse deutlich verringert sein können. Unter Abrollen einer Achse auf der Fahrbahn sei das Abrollen der Räder dieser Achse auf der Fahrbahn verstanden.

Eine bevorzugte Weiterbildung sieht neben einem Fahrzustand mit allen auf einer Fahrbahn abrollenden Achsen einen weiteren Fahrzustand vor, in welchem lediglich die Schwachlastachse auf der Fahrbahn abrollt und die beiden anderen Achsen von der Fahrbahn abgehoben sind. Das bringt überraschenderweise mit geringem Aufwand einige bedeutende Vorteile.

Die bevorzugt genannte Weiterbildung der Erfindung macht sich die Erkenntnis zunutze, dass ein nicht vernachlässigbarer Anteil von Fahrten mit solchen Nutzfahrzeuganhängern bei geringerer Beladung oder gänzlich leerem Anhänger erfolgt und dass für eine solche geringe Beladung oder einen unbeladenen Nutzfahrzeuganhänger eine Achslast zu bewältigen ist, welche wesentlich niedriger liegt als die maximal zulässige Achslast jeder einzelnen der drei Achsen einer konventionellen Dreifach-Achsanordnung mit auf gleiche Achsbelastung ausgelegten einzelnen Achsen. Unter Ausnutzung dieser Erkenntnis wird eine der drei Achsen der Dreifach-Achsanordnung als eine Schwachlast-Achse ausgeführt und als einer von mehreren Fahrzuständen des Nutzfahrzeuganhängers ein nachfolgend auch als Schwachlast-Fahrzustand bezeichneter Fahrzustand vorgesehen, bei welchem lediglich die Räder der Schwachlastachse auf der Fahrbahn abrollen. Der Schwachlast-Fahrzustand ist vorteilhafterweise durch einen Benutzer einstellbar. Der Übergang in einen demgegenüber als Schwerlast-Fahrzustand bezeichneten Fahrzustand kann gleichfalls durch einen Benutzer vorgebbar sein oder kann auch bei zunehmender Belastung der Schwachlastachse automatisch einstellbar sein, um eine Überlastung der Schwachlastachse zu vermeiden, falls der Benutzer vor Beladung des Nutzfahrzeuganhängers den Wechsel in den Schwerlastzustand vergessen hat.

Die Erfindung ist insbesondere bei Sattelkippern, welche überwiegend im Baustellenverkehr eingesetzt sind, von besonderem Vorteil, da bei solchen Einsatzarten der Anteil von Leerfahrten häufig rund 50 % beträgt. Bei Baustellenfahrzeugen ist auch von besonderem Vorteil, die Reifenprofile auf der Schwachlastachse anders zu gestalten als bei den beiden anderen Achsen. Insbesondere können die beiden anderen Achsen für die Fahrten auf unbefestigtem oder unebenem Untergrund grobstollig ausgeführt sein und die Reifen auf der Schwachlastachse ein Reifenprofil aufweisen, welches für Leerfahrten auf Asphalt ausgelegt ist. Im Baustellenbereich selbst ist dann eine hohe Griffigkeit durch die grobstolligen Profile der beiden anderen Achsen gewährleistet und bei Leerfahrten auf Asphaltstrecken kommt vorteilhaft der geringe Rollwiderstand der Reifen der Schwachlastachse zur Geltung. Ferner ist für den Einsatz als Baustellenfahrzeug mit engen Kurvenfahrten ein kurzer Achsabstand von besonderem Vorteil.

Die Erfindung ist nachfolgend anhand bevorzugter Ausführungsbeispiele unter Bezugnahme auf die Abbildungen noch eingehend veranschaulicht. Dabei zeigt:
- Fig. 1: einen herkömmlichen Sattelkipper in Seitenansicht,
- Fig. 2: einen erfindungsgemäß modifizierten Sattelkipper,
- Fig. 3: den Sattelkipper nach Fig. 2 im Schwachlast-Fahrzustand,
- Fig. 4: einen anderen Sattelauflieger-Anhängertyp,
- Fig. 5: den Anhänger nach Fig. 4 im Schwachlast-Fahrzustand,
- Fig. 6: eine zu Fig. 4 alternative Ausführung,
- Fig. 7: eine weitere Alternative im Schwachlast-Fahrzustand,
- Fig. 8: eine Variante mit Schwachlastachse als Liftachse,
- Fig. 9: den Anhänger nach Fig. 8 mit zwei angehobenen Achsen.

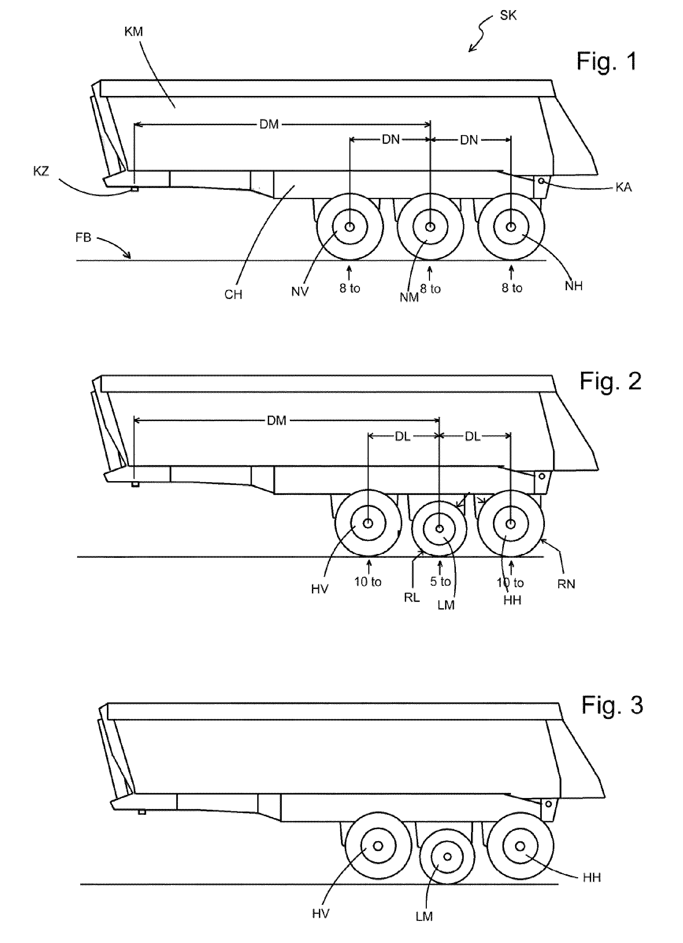

Fig. 1 zeigt in Seitenansicht schematisch einen Sattelauflieger-Anhänger in Form eines Sattelkippers SK mit einer Kippmulde KM, welche um eine am hinteren Ende des Chassis CH angeordnete Kippachse KA relativ zum Chassis kippbar ist. Der Sattelauflieger-Anhänger ist an ein in Fig. 1 nicht mit dargestelltes Zugfahrzeug über eine Sattelkupplung ankoppelbar. Als Teil der anhängerseitigen Einrichtungen für die Ankopplung an das Zugfahrzeug ist ein Königszapfen KZ dargestellt.

Das Chassis CH des Sattelkippers SK ist über drei Achsen NV, NM und NH gegen eine Fahrbahn FB abgestützt. Eine zusätzliche Abstützung ist über das Zugfahrzeug und die Sattelkupplung im Frontbereich des Chassis gegeben. Die drei Achsen NV, NM, NH sind um gleiche Abstände DA in Fahrtrichtung voneinander beabstandet und typischerweise für gleiche maximale Achslasten ausgelegt, wobei im skizzierten Beispiel eine Achslast von 8 t für jede der drei Achsen NV, NM und NH angenommen ist. Ein mittlerer Radstand zwischen Königszapfen und Dreifach-Achsanordnung ist mit DM bezeichnet. Der mittlere Radstand DM liegt typischerweise in einem Bereich von 5 m. Die gegenseitigen Abstände DA der einzelnen Achsen betragen bei der angenommenen maximalen Achslast wenigstens 1.300 mm.

Fig. 2 zeigt eine erfindungsgemäße Abwandlung des Sattelkippers nach Fig. 1. Hierbei ist insbesondere anstelle der normal mit 8 t belastbaren mittleren Achse NM eine Schwachlastachse LM als mittlere Achse vorgesehen. Die Schwachlastachse LM weist Reifen mit einem verringerten Reifendurchmesser RL auf, wogegen der Reifendurchmesser der beiden anderen Achsen HV und HH mit RN bezeichnet ist und als gleich zum Reifendurchmesser der Räder herkömmlicher Sattelkipper nach Fig. 1 angenommen sei. Die vordere Achse HV und die hintere Achse HH sind vorzugsweise gleich ausgeführt und besitzen eine maximale zulässige Achslast von beispielsweise 10 t, so dass sich eine über alle drei Achsen kumulierte Achslast von 25 t ergibt, welche annähernd gleich der kumulierten maximalen Achslast von 24 t bei der herkömmlichen Sattelkipper-Ausführung nach Fig. 1 ist. Neben dem Reifendurchmesser kann vorteilhafterweise auch die Reifenbreite senkrecht zur Zeichenebene der Fig. 2 bei der Schwachlastachse LM gegenüber den beiden anderen Achsen verringert sein.

In dem in Fig. 2 dargestellten Normallast-Fahrzustand des Sattelkipper-Anhängers rollen die Reifen aller drei Achsen HV, LM und HH auf der Fahrbahn ab und die gesamte aktuelle Achslast verteilt sich auf die drei Achsen, wobei vorteilhafterweise auch eine variable Achslastregelung vorgesehen sein kann, welche die Achslast an den einzelnen Achsen auf den aktuellen Beladungszustand abstimmt. Die Abstände der Achsen HV und HH von der Schwachlastachse LM in Fahrtrichtung sind mit DL bezeichnet und im bevorzugten skizzierten Beispielsfall als gleich groß angenommen. Durch die geringere maximale Achslast der in der Mitte angeordneten Schwachlastachse LM können vorteilhafterweise gemäß geltenden Bestimmungen die Achsabstände DL auch geringer gewählt werden als die Achsabstände DA bei dem konventionellen Sattelkipper nach Fig. 1. Gemäß geltenden Bestimmungen sind zwar für Achsen mit einer maximalen Achslast von 10 t größere gegenseitige Achsabstände vorgeschrieben als bei Achsen mit nur 8 t maximaler Achslast wie in Fig. 1, durch die mittige Anordnung der Schwachlastachse LM ist der gegenseitige Achsabstand der höher belastbaren Achsen HV und HH mit zwei DL aber wesentlich größer als der vorgeschriebene Mindestabstand zwischen HV und HH mit ca. 1.800 mm. Bei als zu Fig. 1 gleich angenommenem mittlerem Radstand DM ergibt sich vorteilhafterweise durch die gegenüber DA nach Fig. 1 geringeren Achsabstände DL in der Ausführung nach Fig. 2 bei dem dargestellten Normal-Fahrzustand mit allen auf der Fahrbahn abrollenden Achsen ein günstigeres Kurvenverhalten des Anhängers gegenüber der Achsanordnung nach Fig. 1.

Fig. 3 zeigt den Sattelkipper-Anhänger nach Fig. 2 in einem Schwachlast-Fahrzustand, bei welchem die Kippmulde KM als leer angenommen sei. Ein Teil des Anhängergewichts lastet auf der Schwachlastachse LM, ein anderer Teil des Anhängergewichts ist im Frontbereich des Chassis bei der Sattelkupplung auf dem Zugfahrzeug abgestützt. Die tatsächliche Belastung der Schwachlastachse LM ist daher im Leerzustand des Sattelkippers typischerweise noch deutlich geringer als die für die Schwachlastachse angenommene maximale Achslast von 5 t. Die vordere Achse HV und die hintere Achse HH sind als Liftachse ausgebildet und in dem in Fig. 3 dargestellten Schwachlast-Fahrzustand relativ zum Chassis so weit angehoben, dass die Reifenlaufflächen von der Fahrbahn beabstandet sind und die Reifen dieser Achsen daher nicht auf der Fahrbahn abrollen. Der Rollwiderstand ist daher in dem Schwachlast-Fahrzustand nach Fig. 3 allein durch die Schwachlastachse LM gegeben. Der Rollwiderstand der Schwachlastachse LM kann durch ein Reifenprofil und durch die Gummimischung und/oder die Geometrie der Reifen der Schwachlastachse LM vorteilhaft niedrig gehalten werden. Insbesondere können bei einem typischerweise im Baustellenbereich eingesetzten Sattelkipper die mit höherer Achslast belastbaren Achsen HV und HH Reifen mit einem grobstolligem Profil für besondere Griffigkeit auf unbefestigtem oder unebenem Untergrund versehen sein. Bei Schwachlast-Fahrzuständen wie in Fig. 3 tritt ein solches im Baustellenbereich vorteilhaftes grobstolliges Profil günstigerweise nicht durch einen hohen Rollwiderstand nachteilig in Erscheinung.

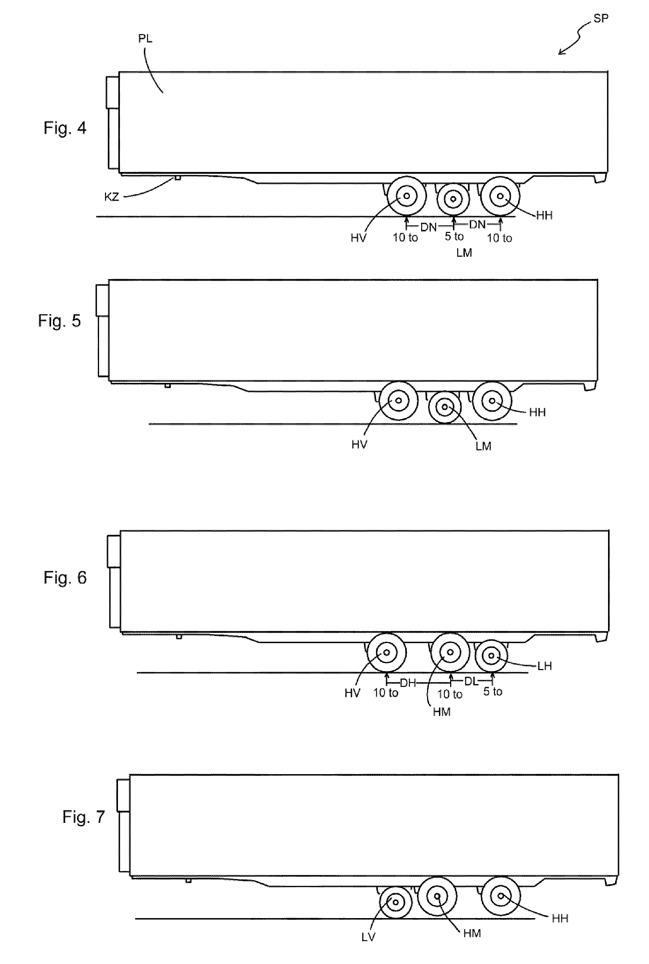

Fig. 4 zeigt eine Ausführung eines Sattelaufliegers SP mit einem durch eine Planenanordnung PL umgebenen Laderaum über einer Ladepritsche. Die Dreifach-Achsanordnung enthält in bevorzugter Ausführung eine Schwachlastachse LM in mittlerer Achsposition der drei Achsen. Die maximalen Achslasten seien wie in den Beispielen nach Fig. 2 mit 10 t für die vorderste Achse HV und die hinterste Achse HH und 5 t für die mittlere Schwachlastachse LM angenommen. Als Achsabstände der vorderen Achse HV und der hinteren Achse HH gegen die mittlere Schwachlastachse LM seien in diesem Fall die bei Anordnungen nach Fig. 1 gebräuchlichen Achsabstände von DN = 1.310 mm angenommen. Die drei Achsen können aber auch wie in Fig. 2 in Fahrtrichtung näher beieinander liegend angeordnet sein. Der mittlere Radstand bei dem in Fig. 4 dargestellten Normallast-Fahrzustand ist als Abstand der mittleren Achse NM vom Königszapfen KZ mit DP bezeichnet und als typischerweise DP = 7.700 mm angenommen.

Fig. 5 zeigt einen zu dem Anhänger SP nach Fig. 4 gehörenden Schwachlast-Fahrzustand analog zu dem Fahrzustand des Sattelkippers nach Fig. 3. Die vordere Achse HV und die hintere Achse HH sind wiederum als Liftachsen ausgebildet und in dem in Fig. 5 dargestellten Schwachlast-Fahrzustand von der Fahrbahn abgehoben. Das Gesamtgewicht des hierbei unbeladenen oder schwach beladenen Anhängers ist auf die Sattelkupplung am Königszapfen KZ und auf die Schwachlastachse LM verteilt. Auch bei diesem Anhängertyp ergeben sich durch die Erfindung die beschriebenen Anteile des verringerten Eigengewichts der Achsanordnung und des damit verbundenen Zuwachses an Nutzlast sowie der verringerte Rollwiderstand und verringerte Reifenverschleiß im Schwachlast-Fahrzustand nach Fig. 5.

Fig. 6 zeigt bei einem Sattelauflieger-Anhänger der in Fig. 4 und Fig. 5 dargestellten Art eine Dreifach-Achsanordnung, bei welcher eine Schwachlastachse LH als hinterste Achse der im übrigen noch eine vordere Achse HV und eine mittlere Achse HM enthaltenden Dreifach-Achsanordnung angeordnet ist. Für die maximale Achsbelastung der einzelnen Achsen seien wieder lediglich beispielhaft und der Einfachheit halber 10 t für die Achsen HV und HM und 5 t für die Schwachlastachse LH angenommen. Durch die bereits genannte Vorschrift des äußeren gegenseitigen Achsabstands von Achsen mit einer maximalen Achslast von 10 t beträgt der Abstand DH zwischen den Achsen HV und HM DH = 1.810 mm. Der Achsabstand zwischen der Achse HM und der Schwachlastachse LH kann auf beispielsweise DL = 1.160 mm gegenüber dem Achsabstand DN nach Fig. 4 verringert sein. Für eine Fahrt mit leerem oder nur gering beladenem Anhänger können wieder die beiden Achsen HV und HM als Liftachsen von der Fahrbahn abgehoben werden, so dass das Gewicht des Anhängers auf die Sattelkupplung und auf die Schwachlastachse LH verteilt sind.

Fig. 7 zeigt eine weitere Variante, bei welcher eine Schwachlastachse LV als vorderste Achse einer Dreifach-Achsanordnung eines Sattelauflieger-Anhängers vor einer mittleren Achse HM und einer hinteren Achse HH angeordnet ist. Die Achsanordnung ist im Schwachlast-Fahrzustand mit von der Fahrbahn abgehobenen Achsen HM und HH dargestellt. Im Normallast-Fahrzustand mit allen auf der Fahrbahn abrollenden Achsen weisen wiederum die Achsen HM und HH eine gegenüber der Schwachlastachse LV wesentlich höhere maximale Achslast von beispielsweise 10 t gegenüber 5 t für die Schwachlastachse LV auf. Die Achsabstände sind in Fig. 7 analog zu Fig. 6 mit größerem Achsabstand zwischen den Achsen HM und HH und kleinerem Achsabstand zwischen der Schwachlastachse LV und der mittleren Achse HM angenommen.

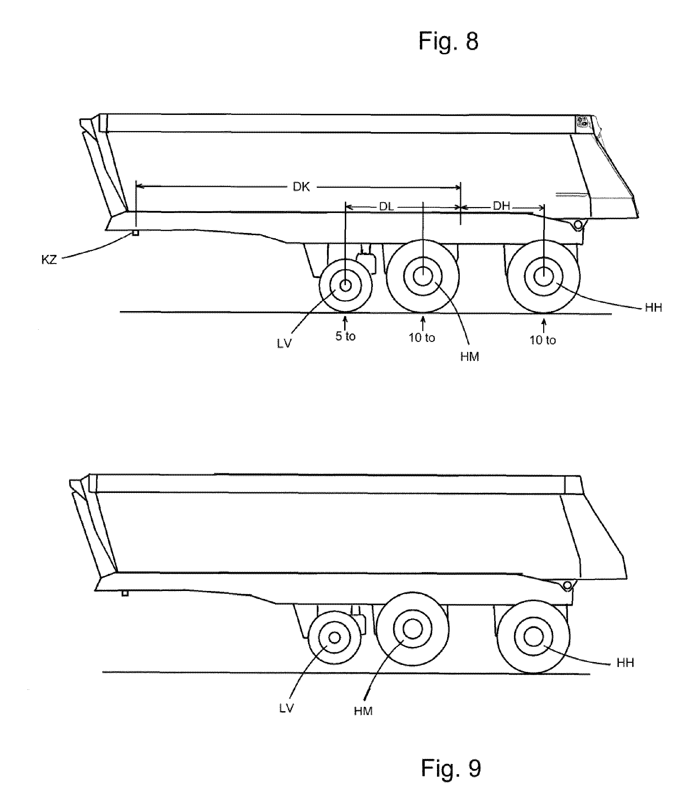

Fig. 8 zeigt eine Variante eines Sattelkippers, bei welchem eine Schwachlastachse LV als vorderste von drei Achsen vorgesehen ist. Für die Schwachlastachse sei wieder eine maximale Achslast von 5 t und für die beiden anderen Achsen eine maximale Achslast von 10 t angenommen. Aufgrund der gegenüber der konventionellen Ausführung nach Fig. 1 höheren maximalen Achslast der mittleren Achse HM und der hinteren Achse HH ist der Achsabstand dieser beiden Achsen vergrößert auf einen Achsabstand DH = 1.810 mm, wogegen der Achsabstand zwischen der Schwachlastachse LV und der mittleren Achse HM auf DL = 1.160 mm verringert ist. Unter Berücksichtigung der verschiedenen maximalen Achslasten der mehreren Achsen ergibt sich bei voll beladenem Anhänger und damit maximaler Belastung der einzelnen Achsen der eingezeichnete effektive Radstand DK = 4.860 mm relativ zum Königszapfen KZ der Sattelkupplungsanordnung.

Bei der Anordnung nach Fig. 8 sei vorgesehen, dass die beiden vorderen Achsen, also die Schwachlastachse LV und die mittlere Achse HM als Liftachsen ausgebildet sind, welche wie in Fig. 9 dargestellt bei geringerer Beladung oder leerem Anhänger in eine angehobene Position verschoben werden können, so dass der Anhänger nur noch an der Sattelkupplungsanordnung und an der hintersten Achse HH abgestützt ist.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Die beschriebene erfindungsgemäße Dreifach-Achsanordnung ist prinzipiell auch bei Zentralachs-Anhängern mit Tridem-Achsanordnung vorteilhaft einsetzbar.

## Patentansprüche

1. Nutzfahrzeuganhänger (SK, SP) mit einer Dreifach-Achsanordnung, welche drei in Fahrtrichtung nahe beieinander angeordnete Achsen enthält, wobei eine der drei Achsen als eine Schwachlast-Achse (LM, LV, LH) mit gegenüber den beiden anderen Achsen (HV, HM, HH) niedrigerem Gewicht und geringerer maximaler Achslast ausgebildet ist.

2. Nutzfahrzeuganhänger nach Anspruch 1, **dadurch gekennzeichnet, dass** ein Fahrzustand einstellbar ist, bei welchem lediglich die Räder der Schwachlast-Achse (LM) auf der Fahrbahn abrollen, insbesondere durch Ausbildung der beiden anderen Achsen als Lift-Achsen.

3. Nutzfahrzeuganhänger nach Anspruch 1 oder 2, **dadurch gekennzeichnet, dass** die Schwachlast-Achse (LM, LV, LH) höchstens 70 %, insbesondere höchstens 60 % des Gewichts der beiden anderen Achsen besitzt.

4. Nutzfahrzeuganhänger nach einem der Ansprüche 1 bis 3, **dadurch gekennzeichnet, dass** die maximal zulässige Achslast der Schwachlastachse (LM, LV, LH) höchstens 66 % der maximal zulässigen Achslast der beiden anderen Achsen (HV, HM, HH) beträgt.

5. Nutzfahrzeuganhänger nach Anspruch 4, **dadurch gekennzeichnet, dass** die maximal zulässige Achslast der Schwachlastachse (LM, LV, LH) höchstens 6 t und die maximal zulässigen Achslasten der beiden anderen Achsen (HV, HV, HH) wenigstens 9 t betragen.

6. Nutzfahrzeuganhänger nach einem der Ansprüche 1 bis 5, **dadurch gekennzeichnet, dass** bei der der Schwachlast-Achse (LM, LV, LH) Reifendurchmesser (RL) und/oder Reifenbreite einen um wenigstens 10 %, insbesondere wenigstens 20 % geringer sind als bei den beiden anderen Achsen (HV, HM, HH).

7. Nutzfahrzeuganhänger nach einem der Ansprüche 1 bis 6, **dadurch gekennzeichnet, dass** zwei Achsen (HV, HH; HM, LV, HM) als Liftachsen ausgebildet sind.

8. Nutzfahrzeuganhänger nach einem der Ansprüche 1 bis 7, **dadurch gekennzeichnet, dass** die Schwachlast-Achse (LM) die mittlere der drei Achsen bildet.

9. Nutzfahrzeuganhänger nach Anspruch 8, **dadurch gekennzeichnet, dass** der Achsabstand der Schwachlastachse (LM, LV, LH) von wenigstens einer der beiden anderen Achsen (HV, HM, HH) geringer ist als 1.200 mm.

10. Nutzfahrzeuganhänger nach einem der Ansprüche 1 bis 9, **gekennzeichnet durch** die Ausbildung als Sattelkippanhänger.

11. Nutzfahrzeuganhänger nach einem der Ansprüche 1 bis 10, **dadurch gekennzeichnet, dass** die Reifen der der Schwachlast-Achse (LM, LV, LH) ein Reifenprofil mit gegenüber dem Reifenprofil der Reifen der anderen Achsen (HV, HM, HH) verringertem Asphalt-Rollwiderstand aufweisen.
